# EUROPÄISCHE PATENTSCHRIFT

(11) **EP 1 376 053 B1**
(45) Veröffentlichungstag und Bekanntmachung des Hinweises auf die Patenterteilung: **11.03.2009**
(21) Anmeldenummer: 03009213.4
(22) Anmeldetag: 23.04.2003
(51) Int. Cl.: G01B 21/04

(54) **Verfahren zum Betrieb eines in wenigstens zwei Betriebsarten betreibbaren Koordinatenmessgerätes**
Method of operating a coordinate measuring apparatus operable in at least two modes
Procédé d' operation d' un appareil de mesure de coordonnées fonctionnant en au moins deux modes

(30) Priorität: 28.06.2002 DE 10229824
(43) Veröffentlichungstag der Anmeldung: 02.01.2004
(73) Patentinhaber: Carl Zeiss Industrielle Messtechnik GmbH, 73447 Oberkochen (DE)
(72) Erfinder: Aubele, Eugen, 89558 Böhmenkirch (DE); Ruck, Otto, 73479 Pfahlheim (DE)
(74) Vertreter: Witte, Weller & Partner

(56) Entgegenhaltungen:
- WO-A-01/96809
- DE-A1- 3 106 031
- DE-A1- 4 424 225
- DE-A1- 19 809 690
- US-B1- 6 434 845

## Beschreibung

Die Erfindung betrifft ein Verfahren zum Betrieb eines wenigstens in einer ersten Betriebsart und einer zweiten Betriebsart betreibbaren Koordinatenmessgerätes mit messendem Tastkopf mit den Schritten: Antasten einer messtechnisch zu erfassenden Koordinate einer Struktur in einem Messvolumen des Koordinatenmessgerätes mit dem messenden Tastkopf, Einstellen einer vorbestimmten Messkraft, mit der der Tastkopf die Struktur berührt, und Einstellen einer vorbestimmten Mess-Auslenkung des Tästkopfes aus einer Null-Lage im Zustand der Berührung der Struktur mit der vorbestimmten Messkraft, wobei die vorbestimmte Mess-Auslenkung des Tastkopfes in der ersten Betriebsart mit einem vorbestimmten Richtungssinn von Änderungen der Auslenkung erreicht wird.

Die Erfindung betrifft weiter ein Koordinatenmessgerat mit einem messenden Tastkopf zum Antasten einer messtechnisch zu erfassenden Koordinate einer Struktur in einem Messvolumen des Koordinatenmessgerätes, mit wenigstens einem Messkraftgenerator zum Einstellen einer vorbestimmten Messkraft, mit der der Tastkopf die Struktur beführt, und mit einem Steuergerät zum Einstellen einer vorbestimmten Mess-Auslenkung des Tastkopfes aus einer Null-Lage im Zustand der Berührung der Struktur mit der vorbestimmten Messkraft, wobei das Koordinatenmessgerät wenigstens in einer ersten Betriebsart und einer zweiten Betriebsart betreibbar ist, und wobei das Steuergerät die vorbestimmte Mess-Auslenkung des Tastkopfes in der ersten Betriebsart mit einem vorbestimmten Richtungssinn von Änderungen der Auslenkung einstellt.

Ein solches Verfahren und ein solches Koordinatenmessgerät sind aus der DE 198 09 690 A1 bekannt.

Koordinatenmessgeräte sind Längenmesseinrichtungen, die in der Regel gleichzeitig die drei kartesischen Koordinaten eines Punktes, beispielsweise eines Punktes auf einem Werkstück, messen. Üblicherweise dienen dazu drei senkrecht zueinander angeordnete Führungsachsen, die mit X, Y und Z bezeichnet werden. Die auf den anderen zwei Achsen aufbauende Z-Achse (meist Pinole genannt) trägt einen Messkopf mit einem taktil (antastend) oder optisch arbeitenden (berührungslosen) Sensor.

In jeder Achse ist ein Maßstab angeordnet, der die jeweilige Position mit hoher Auflösung (z.B. 0,1µm) digital mißt. Neben dieser kartesischen Achsenanordnung gibt es auch Geräte mit zwei oder mehreren Drehgelenken. Die am häufigsten zum Einsatz kommenden Bauarten sind jedoch sogenannte Portal- oder Horizontalarm- Messgeräte.

Koordinatenmessgeräte lassen sich häufig in wenigstens einer ersten und einer zweiten Betriebsart betreiben.

In einer ersten Betriebsart werden die Achsen des Koordiantenmessgerätes motorisch angetrieben und durch ein Steuergerät gesteuert (Computerized Numerical Control; CNC-Betrieb).

In einer zweiten Betriebsart werden die Koordinatenmessgeräte mit motorisch angetriebenen Achsen und manueller Betätigung oder Steuerung durch Steuerhebel betrieben. Die oben genannte DE 198 09 690 A1 zeigt ein Koordinatenmessgerät, dass in einer dort als Benutzerführung bezeichneten zweiten Betriebsart betreibbar ist.

Im Rahmen dieser Benutzerführung wird der Tastkopf des Koordinatenmessgerätes zunächst von einem Benutzer manuell an das zu messende Werkstück herangefahren. Dazu werden einem Steuergerät des Koordinatenmessgerätes Signale von manuell betätigten Steuerhebeln oder Handrädern übermittelt. Das Steuergerät bildet daraus Signale, mit denen die Antriebsmotoren des Koordinatenmessgerätes den Steuerhebel-Befehlen folgend angetrieben werden.
Nach dem benutzergeführten Antasten des Werkstückes durch den Tastkopf übernimmt das Steuergerät vollständig die Tastkopfsteuerung.

In einem Regelvorgang stellt das Steuergerät unter anderem eine vorbestimmte Messkraft ein, mit der der Tastkopf das Werkstück berührt. Diese Einstellung einer vorbestimmten Messkraft ermöglicht eine anschließende Korrektur von messkraftinduzierten Durchbiegungen der Tastelemente, die bei genauen Messungen im Mikrometerbereich nicht vernachlässigt werden darf.

Ein messender Tastkopf stellt selbst eine kleine Koordinatenmesseinrichtung dar, die üblicherweise aus drei kartesisch angeordneten Längenmesssystemen besteht, die beispielsweise auf Federparallelogrammen gelagert sind und die sich parallel zu den Achsen des Koordinatenmessgerätes bewegen können. Induktive Wegaufnehmer messen ständig die Auslenkungen in den drei Achsen. Nach Umwandlung in Digitalwerte werden die gemessenen Auslenkungen zu den Koordinaten der Hauptachsen des Koordinatenmessgerätes addiert.

Einen großen Einfluß auf die erzielbare Genauigkeit haben die Messkraft und der zu Verfügung stehende Auslenkbereich. Bei der Erzeugung der Messkraft wird zwischen passiven und aktiven Systemen unterschieden. Die passiven Systeme besitzen Federn mit wegabhängiger Messkraft. Bei den aktiven Systemen werden Größe und Richtung der Messkraft gewissermaßen durch elektronische Federn gesteuert, die durch Spulen in ringförmigen Magnetspalten gebildet werden.

Die CNC-Betriebsart zeichnet sich dadurch aus, dass die ungefähre Lage des Werkstückes dem Messvolumen des Koordinatenmessgerätes in der Steuerung des Koordinatenmessgerätes bekannt ist und dass die Steuerung der Tastkopfbewegung allein durch das Steuergerät erfolgt. Unter normalen Umständen wird das Koordinatenmessgerät so betrieben, dass der bei weitem überwiegende Teil der Messungen in der CNC-Betriebsart durchgeführt wird.

Die benutzergeführte Betriebsart wird im Allgemeinen nur ergänzend für Einzelmessungen benutzt, beispielsweise dann, wenn die Erstellung von Daten für einen CNC-Ablauf aufwendiger ist als eine oder einige wenige benutzergeführte Messungen.

Bei einem Vergleich von Messwerten, die sich auf dieselben Punkte derselben Struktur beziehen und die einmal in einer CNC-Betriebsart und einmal in einer benutzergeführten Betriebsart aufgenommen worden sind, haben sich unerwünscht große Abweichungen der Messwerte untereinander gezeigt.

Vor diesem Hintergrund besteht die Aufgabe der Erfindung darin, die Streubreite zwischen Messwerten, die mit einem Koordinatenmessgerät in einer ersten Betriebsart aufgenommen wurden und Messwerten, die in einer zweiten Betriebsart erfaßbar sind, zu verringern.

Dabei bezieht sich der Begriff der Streubreite auf Abweichungen von in einer ersten Betriebsart erhaltenen Messwerten zu in einer zweiten Betriebsart erhaltenen Messwerten.

Diese Aufgabe wird bei einem Verfahren der eingangs genannten Art dadurch gelöst, dass das Antasten der Koordinate der Struktur durch den Tastkopf vor dem Einstellen der vorbestimmten Messkraft in der zweiten Betriebsart mit dem gleichen Richtungssinn erfolgt wie in der ersten Betriebsart.

Bei einem Koordinatenmessgerät der eingangs genannten Art wird diese Aufgabe dadurch gelöst, dass das Steuergerät das Antasten der Koordinate der Struktur durch den Tastkopf vor dem Einstellen der vorbestimmten Messkraft in der zweiten Betriebsart mit dem gleichen Richtungssinn durchführt wie in der ersten Betriebsart.

Diese Lehre basiert auf der Erkenntnis, dass beim Einstellen der Messkraft, mit der der Tastkopf die messtechnisch zu erfassende Struktur berührt, Hystereseeffekte auftreten können, die die tatsächlich wirkende Messkraft und damit die Messergebnisse unerwünscht beeinflussen können.

Unter einer Hysterese versteht man allgemein eine Beziehung zwischen zwei physikalischen Größen, die nicht nur von den momentanen Werten der physikalischen Größen, sondern auch von deren Vorgeschichte abhängt. In dem hier betrachteten speziellen Fall des Betreibens eines Koordinatenmessgerätes ist die sich tatsächlich einstellende Messkraft nicht nur von Momentanwerten für die Tastkopfauslenkung und/oder Ansteuerung der Messkraftgeneratoren abhängig, sondern auch von der Richtung aus der eine bestimmte Auslenkung des Tastkopfes beim Einstellen der Messkraft erreicht wird.

Vorteilhafterweise wird dadurch, dass das Antasten der Koordinate der Struktur durch den Tastkopf vor dem Einstellen der vorbestimmten Messkraft in der zweiten Betriebsart mit dem gleichen Richtungssinn erfolgt wie in der ersten Betriebsart, dafür gesorgt, dass die Hystereseeffekte in beiden Fällen zumindest ähnlich sind. Dadurch werden aus Richtungsunterschieden resultierende Messkraftunterschiede zumindest verringert. Wegen der starken Abhängigkeit der Messwert-Streuung von Messkraft-Streuungen, wird dadurch auch die Messwert-Streuung reduziert.

Es ist bevorzugt, dass die erste Betriebsart eine vollständig rechnergesteuerte Betriebsart ist und dass die zweite Betriebsart einen benutzergeführten ersten Teilmodus und einen rechnergesteuerten zweiten Teilmodus aufweist, wobei das in der zweiten Betriebsart erfolgende Einstellen der vorbestimmten Messkraft im zweiten Teilmodus erfolgt.

Diese Ausgestaltung erlaubt im Rahmen einer benutzergeführten Betriebsart die Durchführung von Einzelmessungen ohne den Aufwand einer spezifischen CNC-Programmierung der Steuerung des Koordinatenmessgerätes. Der neue Ablauf im zweiten Teilmodus der benutzergeführten zweiten Betriebsart liefert die weiter oben bereits genannten Vorteile, das heißt die Vermeidung von systematischen Differenzen zwischen benutzergeführten Messungen und CNC-Messungen der gleichen Koordinate aufgrund von Hysterese-Effekten.

Eine weitere Ausgestaltung sieht vor, dass der zweite Teilmodus beim Betrieb in der zweiten Betriebsart nach einem im ersten Teilmodus erfolgenden Vor-Antasten der Struktur ausgelöst wird, wenn die durch das Vor-Antasten erfolgende Auslenkung des Tastkopfes einen vorbestimmten Schwellenwert durchläuft.

Dieses Vorsehen eines Schwellenwertes für die Auslenkung als Trägerpunkt für die Umschaltung vom benutzergeführten ersten Teilmodus auf den Steuergerät-geführten oder rechnergestützten zweiten Teilmodus verhindert ein unerwünschtes Umschalten in den zweiten Modus bei versehentlichen, leichten Berührungen der Struktur beim benutzergeführten Herantasten. Mit anderen Worten: Der rechnergestützte Ablauf im zweiten Teilmodus wird vorteilhafterweise nur dann ausgelöst, wenn der Benutzer den Schwellenwert beim manuellen Vor-Antasten bewußt und gewollt überdrückt hat.

Eine weitere Ausgestaltung sieht vor, dass der Wert der vorbestimmten Mess-Auslenkung zwischen dem vorbestimmten Schwellenwert und dem Wert der Auslenkung des Tastkopfes im Moment der Berührung der Struktur mit dem Tastkopf beim Vor-Antasten liegt.

Auch diese Ausgestaltung liefert den Vorteil einer sehr deutlichen Definition der Auslöseschwelle für den zweiten Teilmodus und vermeidet dadurch unerwünschte Umschaltungen von der Benutzerführung im ersten Teilmodus auf den Steuergerät-gesteuerten zweiten Teilmodus bei versehentlichen Berührungen der Struktur im Rahmen der Benutzerführung.

Eine weitere Ausgestaltung sieht vor, dass der vorbestimmte Schwellenwert mit Bezug auf den Wert der Mess-Auslenkung symmetrisch zum Wert der Auslenkung des Tastkopfes im Moment der Berührung bei der Vor-Antastung liegt.

Die Vorteile dieser Lage des Schwellenwerten ergeben sich daraus, dass bei einem kleineren Abstand des Schwellenwertes zum Wert der Auslenkung im Moment der Berührung die vom Benutzer zu überdrückende Schwelle weniger deutlich wahrnehmbar wäre.

Würde der Schwellenwert dagegen einen größeren Abstand haben, würden sich unter Umständen weitere, unerwünschte Hystereseeffekte ergeben, da auch das Durchlaufen des Schwellenwertes zur Vorgeschichte der Einstellung der Mess-Auslenkung des Tastkopfes zählt.

Die genannte symmetrische Lage besitzt den Vorteil, einen guten Kompromiß zwischen den Anforderungen an die Wahrnehmbarkeit des Schwellenwertes und der Vermeidung unnötiger Hystereseeffekte darzustellen.

Eine alternative Ausgestaltung zeichnet sich dadurch aus, dass der vorbestimmte Schwellenwert mit Bezug auf den Wert der Mess-Auslenkung nicht-symmetrisch zum Wert der Auslenkung des Tastkopfes im Zeitpunkt der Berührung der Struktur durch den Tastkopf bei der Vor-Antastung liegt.

Diese Ausgestaltung kann sich dann als vorteilhaft erweisen, wenn die vorstehend genannten Vorteile einer symmetrischen Lage durch andere Einflüsse an Bedeutung verlieren.

Eine weitere Ausgestaltung zeichnet sich dadurch aus, dass die Auslenkung des Tastkopfes nach dem mit einem bestimmten Richtungssinn erfolgenden Durchlaufen des Schwellenwertes in die entgegengesetzte Richtung verändert wird.

Dieser Richtungswechsel ermöglicht vorteilhafterweise ein späteres Einstellen einer vorbestimmten Mess-Auslenkung des Tastkopfes aus der gleichen Richtung wie beim CNC-Verlauf (erste Betriebsart).

Eine weitere Ausgestaltung sieht vor, dass die Auslenkung des Tastkopfes auf einen vorbestimmten Wert geändert wird.

Durch die Auswahl und Bestimmung des vorbestimmten Wertes kann vorteilhafterweise das Hystereseverhalten bzw. die Ähnlichkeit des Hystereseverhaltens und damit der Hystereseeffekte beim benutzergeführten und beim rechnergestützten Antasten beeinflußt werden.

Gemäß einer weiteren Ausgestaltung entspricht der vorbestimmte Wert dem Wert der Auslenkung des Tastkopfes im Moment der Berührung der Struktur durch den Tastkopf bei der Vor-Antastung.

Damit wird vorteilhafterweise der Wert der Auslenkung bei der ersten Berührung im Rahmen der Vor-Antastung wieder zum Ausgangspunkt der Steuergerät-geführten endgültigen Antastung für die Messwertaufnahme. Hystereseeffekte, die sich aus dem vorübergehenden Durchlaufen des Schwellenwertes ergeben, werden dadurch weitgehend vermieden. Auf der anderen Seite erlaubt das vorübergehende Durchlaufen des Schwellenwertes gewissermaßen eine Verifizierung des Benutzerwunsches und damit eine Vermeidung zeitraubender, unerwünschter Messantastungen (durch den Rechner im zweiten Teilmodus) bei versehentlichen Berührungen der Struktur in der benutzergeführten Betriebsart.

Gemäß einer weiteren Ausgestaltung entspricht der vorbestimmte Wert dem Wert einer konstanten Auslegung des Tastkopfes in der rechnergesteuerten ersten Betriebsart.

Diese Ausgestaltung ermöglicht eine bestmögliche Angleichung von Hystereseeffekten, weil sie dafür sorgt, dass auch die Messantastung nach einer benutzergeführten Auslösung nicht nur mit gleichem Richtungssinn, sondern auch mit gleichem Startwert erfolgt wie beim CNC-Verlauf (erste Betriebsart).

Allerdings ist dieser Vorteil mit einem größeren Zeitaufwand für die Messung verbunden, weil der Gesamtzeitaufwand durch das anschließende, wegen der größeren Vorauslenkung länger dauernde Einregeln der Mess-Auslenkung des Tastkopfes, größer wird.

Eine weitere Ausgestaltung sieht vor, dass der vorbestimmte Wert zwischen den Werten der Auslenkung des Tastkopfes im Moment der Berührung der Vor-Antastung und dem Wert einer konstanten Auslenkung des Tastkopfes in der rechnergesteuerten ersten Betriebsart liegt.

Diese Ausgestaltung liefert die Möglichkeit, den besten Kompromiß zwischen möglichst weitgehendem Vermeiden unterschiedlicher Hystereseeffekte und dem dafür notwendigen Zeitaufwand einzustellen.

Nach einer weiteren Ausgestaltung wird die Auslenkung des Tastkopfes anschließend in Richtung auf die vorbestimmte Mess-Auslenkung verändert.

Dadurch ergibt sich der Vorteil, dass die gewünschte Endlage des Tastkopfes für die Messung mit dem gewünschten Richtungssinn angesteuert wird.

Eine weitere Ausgestaltung sieht vor, dass das Koordinatenmessgerät in der ersten Betriebsart vor dem Antasten mit größerer Verstellgeschwindigkeit und Auslenkung des Tastkopfes betrieben wird, als in der zweiten Betriebsart, und dass die größere Geschwindigkeit und Auslenkung des Tastkopfes beim Annähern an die Struktur verringert wird.

Die größere Verstellgeschwindigkeit der Tastkopfposition in der ersten Betriebsart ermöglicht eine höhere Geschwindigkeit der Messwertaufnahme in der ersten Betriebsart im Vergleich zu der zweiten Betriebsart. Mit anderen Worten: In gleichen Zeiten können in der ersten Betriebsart mehr Punkte angefahren und vermessen werden als in der zweiten Betriebsart. Die größere Tastkopfauslenkung sorgt dabei gewissermaßen für eine ausreichende Bremsweg-Reserve zur Korrektur der Bewegung bei fehlerhaften Daten für die Werkstückposition im CNC-Modus (erste Betriebsart).

Eine weitere Ausgestaltung zeichnet sich dadurch aus, dass das Koordinatenmessgerät für den Betrieb im ersten Modus kalibriert ist.

Damit ist der Vorteil verbunden, dass die Kalibrierung des Koordinatenmessgerät für die Betriebsart erfolgt, in der der überwiegende Teil der Messwerte aufgenommen wird. Unter einer Kalibrierung versteht man in diesem Zusammenhang, dass mit einem bestimmten Taster ein definierter Prüfkörper in der ersten Betriebsart (CNC-Modus) vermessen wird. Abweichungen der erhaltenen Messwerte von dem bekannten Abmessen des Prüfkörper werden im Steuergerät des Koordinatenmessgerätes zu Korrekturwerten für spätere Messungen verarbeitet, gespeichert und bei späteren Messungen verwendet.

Eine weitere Ausgestaltung sieht vor, dass das Koordinatenmessgerät für den Betrieb in der ersten Betriebsart kalibriert ist

Diese Ausgestaltung ist vor allem dann vorteilhaft, wenn eine große zahl von Messungen in der zweiten Betriebsart erfolgt.

Eine Ausgestaltung des Koordinatenmessgerätes sieht vor, dass in der zweiten Betriebsart eine Benutzerführung durch Steuerhebel oder Landräder erfolgt, mit denen Antriebe des Koordinatenmessgerätes mit Unterstützung des Steuergerätes aktiviert werden.

Steuerhebel oder Landräder erlauben vorteilhafterweise eine sehr feinfühlig Benutzerführung. Die Zwischenschaltung des Steuergerätes des Koordinatenmessgerätes zu Aktivierung der Antriebe des Koordinatenmessgerätes erlaubt vorteilhafterweise das Vorstehen vielfältiger Sicherheitsfunktionen. Beispielsweise könnten Beschränkungen der Verstellgeschwindigkeit erfolgen, die eine Beschädigung des Koordinatenmessgerätes durch eine unsachgemäße Benutzerführung vermeiden.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sonder auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: schematisch ein in wenigstens zwei Betriebsart betreibbares Koordinatenmessgerät mit messendem Tastkopf ;
- Fig. 2: Einzelheiten des messenden Tastkopfes aus der Fig. 1;
- Fig. 3: qualitativ den verlauf der Tastkopfauslenkung über der Zeit beim Antasten und Messen einer Struktur im Rahmen einer ersten Betriebsart;
- Fig. 4: qualitativ den Verlauf der Tastkopfauslenkung über der Zeit beim Antasten und Aufnehmen eines Messwertes einer Struktur im Rahmen einer benutzergeführten zweiten Betriebsart nach einem bekannten Verfahren;
- Fig. 5: qualitativ den zeitlichen Verlauf der Tastkopfauslenkung beim Antasten und Aufnehmen eines Messwertes einer Struktur nach Ausgestaltungen der Erfindung;
- Fig. 6: ein Flußdiagramm eines Programmoduls zu reproduzierbaren Antasten eines Werkstückes bzw. einer Struktur und Aufnehmen eines Messwertes;
- Fig. 7: ein Flußdiagramm als Ausführungsbeispiel des erfindungsgemäßen Verfahrens.

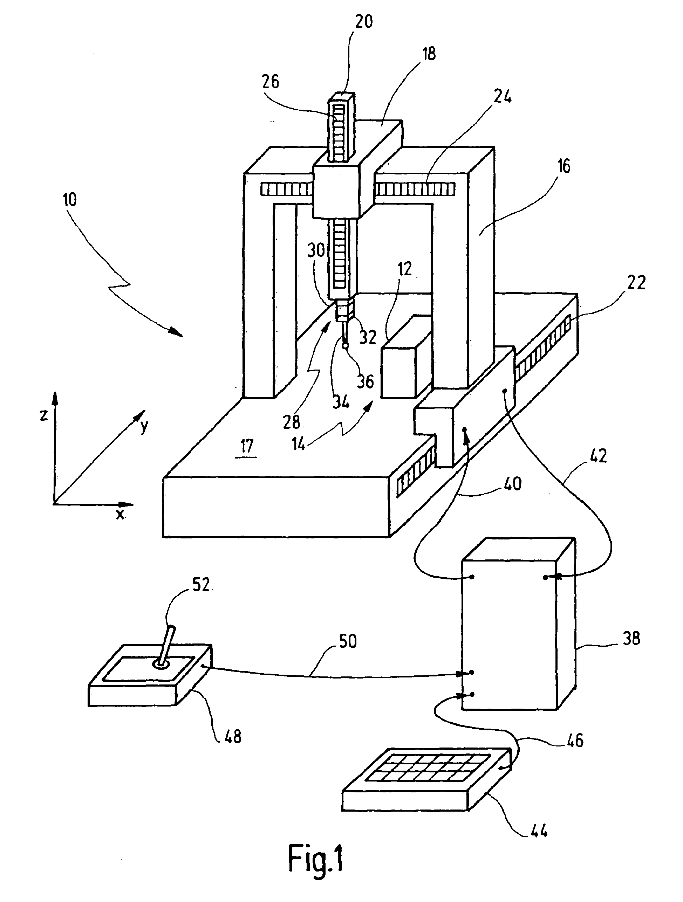

Die Ziffer 10 in der Fig. 1 bezeichnet ein Koordinatenmessgerät zum Erfassen einer Koordinate 12 an einer Struktur 14 im Messvolumen des Koordinatenmessgerätes 10. Das Koordinatenmessgerät 10 weist einen Messschlittenträger 16 auf, der auf einer Grundplatte 17 des Koordinatenmessgerätes 10 in Y-Richtung beweglich geführt ist. Der Messschlittenträger 16 trägt einen in X-Richtung beweglichen Messschlitten 18, der eine in Z-Richtung bewegliche Pinole 20 aufnimmt und führt.

Die Pinole 20, der Messschlitten 18 und der Messschlittenträger 16 können jeweils über Reibrollenantriebe bewegt werden. Dabei wird die Position des Messschlittenträgers 16 beispielsweise durch optisches Abtasten eines Inkrementalmaßstabes 22 an der Grundplatte 17 erfaßt. Analog wird die Position des Messschlittens 18 durch optisches Abtasten eines Inkrementalmaßstabes 24 am Messschlittenträger 16 erfaßt und die Position der Pinole 20 wird durch optisches Abtasten eines Inkrementalmaßstabes 26 an der Pinole erfaßt.

Die Pinole 20 trägt an ihrem der Grundplatte 17 zugewandten Ende einen Tastkopf 28, der als sogenannter messender Tastkopf für jede der drei Raumrichtungen ein feststehendes Teil 30, und ein in jeweils eine Raumrichtung relativ zu dem feststehenden Teil 30 bewegliches Teil 32 aufweist. An dem beweglichen Teil 32 ist über einen Taststift 34 eine Tastkugel 36 angebracht.

Ein Steuergerät 38 steuert über eine Steuerleitung 40 die nicht dargestellten Antriebe des Messschlittenträgers 16, des Messschlittens 18 und der Pinole 20 so, dass der Tastkopf 28 die Koordinate 12 der Struktur 14 im Messvolumen des Koordinatenmessgerätes 10 mit der Tastkugel 36 in definierter Weise antastet.

Ein definierter Antastzustand zeichnet sich beispielsweise durch eine definierte Antastkraft zwischen der Tastkugel 36 und der Struktur 14 bei einer vorbestimmten Auslenkung des beweglichen Teils 32 des Tastkopfes 28 gegen dessen feststehendes Teil 30 aus. Beim Vorliegen dieses definierten Zustandes werden die Signale der weiter oben erwähnten Induktivgeber im Tastkopf, die eine Auslenkung des Tastkopfes relativ zu einer definierten 0-Lage liefern, und die Signale von den optisch abgetasteten Inkrementalmaßstäben 22, 24 und 26 über Signalleitungen 42 an das Steuergerät 38 übermittelt.

Jeweils zu einer Raumrichtung ergibt sich damit der Messwert für die zugehörige Koordinate 12 der Struktur 14 als Summe des durch optische Abtastung generierten Inkrementsignals sowie des dieser Raumrichtung zugeordneten Induktivgebersignals aus dem Tastkopf.

In einer ersten Betriebsart werden verschiedene Koordinaten 12 der Struktur 14 durch den Tastkopf 28 angefahren, wobei die Steuerung des Tastkopfes 28 über eine Steuerung der Pinole 20, des Messschlittens 18 und Messschlittenträgers 16 durch das Steuergerät 38 voll automatisch nach einem im Steuergerät 38 abgelegten Programm erfolgt. Die Eingabe der dafür notwendigen Daten erfolgt beispielsweise über eine Eingabeschnittstelle 44, die mit dem Steuergerät 38 über eine Datenleitung 46 verbunden ist. Die Eingabeschnittstelle 44 kann beispielsweise eine Tastatur, eine Einrichtung zum Lesen eines Datenträgers, beispielsweise einer Diskette, oder eine Schnittstelle zu einem externen Netzwerk sein.

Alternativ zur vollautomatischen Steuerung des Messablaufes in einer ersten Betriebsart (CNC-Modus) kann die Aufnahme von Messwerten auch zumindest teilweise benutzergeführt erfolgen. Dazu ist ein Steuerpult 48 vorgesehen, das über eine Datenleitung 50 mit dem Steuergerät 38 verbunden ist. Das Steuerpult 48 besitzt einen Steuerhebel 52 und/oder andere Bedienelemente wie Handräder oder Tastaturelemente, die von einem Benutzer manuell bedient werden können. Über entsprechende Auslenkungen des Steuerhebels 52, bzw. der anderen genannten Bedienelemente, kann der Benutzer die Bewegung des Tastkopfes 28 zumindest bis zum Antasten der Struktur 14 steuern.

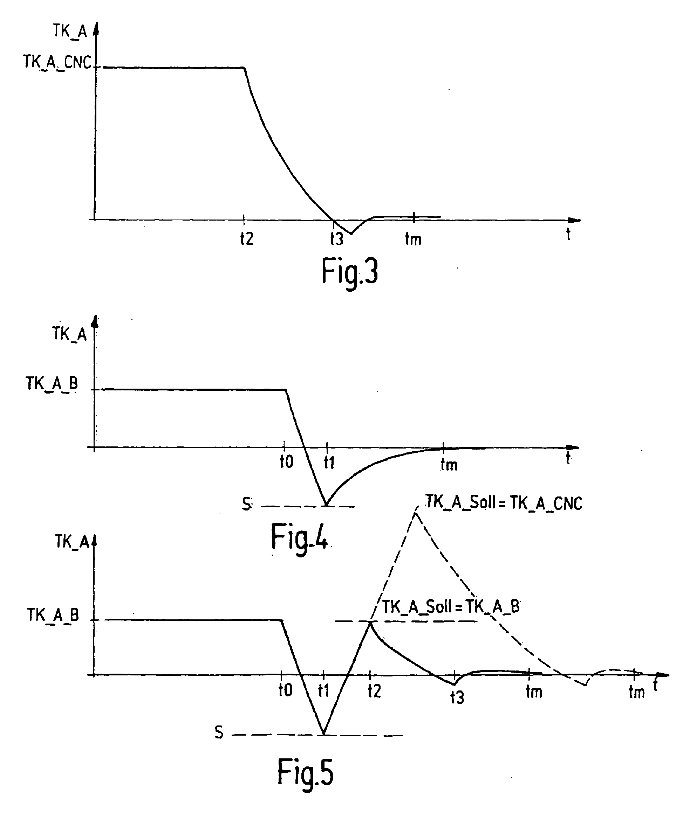

Dazu werden die entsprechenden Steuersignale aus dem Steuerpult 48 über die Datenleitung 50 an das Steuergerät 38 übertragen und dort in Ansteuersignale für die nicht dargestellten Rollenantriebe für den Messschlittenträger 16, den Messschlitten 18 und die Pinole 20 umgewandelt. Diese benutzergeführte manuelle Steuerung des Tastkopfes 28 stellt ein Beispiel einer zweiten Betriebsart zum Betreiben des Koordinatenmessgerätes 10 dar. Einzelheiten zu den Antastvorgängen in der ersten und in der zweiten Betriebsart werden weiter unter mit Bezug auf die Figuren 3 - 7 erläutert.

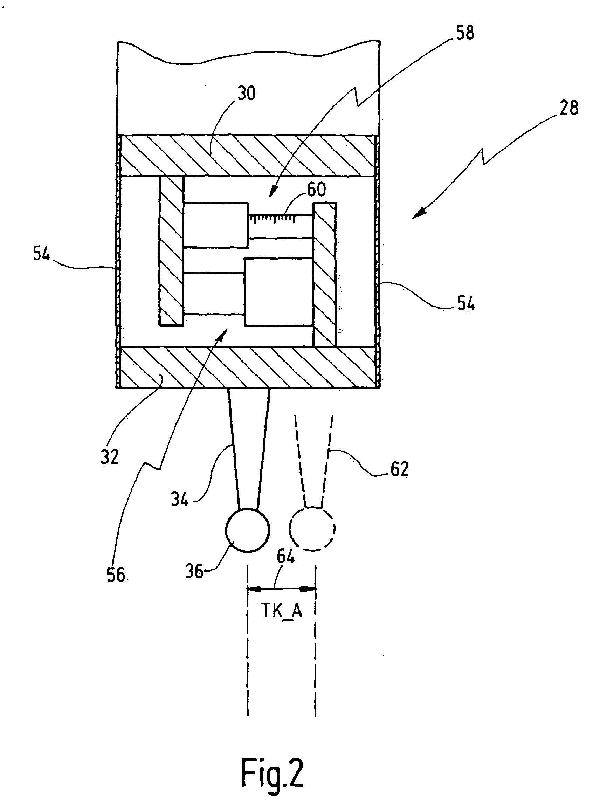

Fig. 2 veranschaulicht das Zustandekommen einer Tastkopfauslenkung TK_A in Verbindung mit konstruktiven Elementen eines messenden Tastkopfes 28 in schematischer Form. Vorab sei bemerkt, dass sich die hier beschriebenen Elemente nur auf eine Raumrichtung, beispielsweise die X-Richtung beziehen. Für die beiden anderen Raumrichtungen, nämlich die Y- und die Z-Raumrichtung verdreifacht sich die in Fig. 2 dargestellte Struktur, abgesehen vom Taststift 34 und der Tastkugel 36. Ein kompletter, in allen drei Raumrichtungen X, Y, und Z, messender Tastkopf ist beispielsweise in der DE 44 24 225 A1 beschreiben, deren Offenbarung insoweit in die Offenbarung der vorliegenden Anmeldung einbezogen wird.

Für jede Raumrichtung weist der messende Tastkopf 28 ein in dieser Raumrichtung feststehendes Teil 30 und ein relativ zu dem feststehenden Teil 30 längs dieser Raumrichtung bewegliches Teil 32 auf. Das feststehende Teil 30 ist mit dem beweglichen Teil 32 über Verbindungselemente 54 elastisch gekoppelt. Die Verbindungselemente 54 können beispielsweise Blattfedern sein, so dass die Anordnung aus den Verbindungselementen 54, dem feststehenden Teil 30 und dem beweglichen Teil 32 ein sogenanntes Federparallelogramm ergibt.

Zwischen dem feststehenden Teil 30 und dem beweglichen Teil 32 ist ein Messkraftgenerator 56 und ein Induktivsensor 58 angeordnet. Der Messkraftgenerator 54 kann beispielsweise nach Art eines Tauchspulenantriebes arbeiten, wie er bereits in der genannten DE 44 24 225 A1 erwähnt wird. Wesentlich im Zusammenhang mit der Darstellung der Fig. 2 ist, dass der Messkraftgenerator 56 in durch das Steuergerät 38 gesteuerter Weise die in der Fig. 2 senkrecht angeordneten Abschnitte des beweglichen Teils 32 und des feststehenden Teils 30 auseinander drücken kann, wodurch sich der mit dem beweglichen Teil gekoppelte Taststift 34 mit der Tastkugel 36 in die gestrichelt dargestellte Position 62 verschiebt.

Dabei kann beispielsweise die durchgezeichnet dargestellte Stellung des Taststiften 34 mit der Tastkugel 36 einer Null-Lage ohne Messkrafterzeugung entsprechen, so dass die in der Fig. 2 mit dem Pfeil 64 bezeichnete Strecke TK_A einer durch den Messkraftgenerator 56 hervorgerufenen Auslenkung des Tastkopfes 28, bzw. der Tastkugel 36 am unteren Ende des Tastkopfes 28 in einer bestimmten Raumrichtung, beispielsweise der X-Richtung, entspricht.

Dabei wird das Ausmaß der Auslenkung TK_A durch den Induktivsensor 58 erfaßt und über die Datenleitung 52 an das Steuergerät 38 übermittelt. Um diese Weggeberfunktion des Induktivgebers 85 zu symbolisieren, ist in der Fig. 2 eine Skalierung 60 dargestellt. Selbstverständlich kann anstelle eines Induktiv-Weggebers 58 auch ein auf anderen physikalischen Messprinzipien basierender Weggeber verwendet werden.

Fig. 3 zeigt einen typischen Verlauf der Tastkopfauslenkung TK_A über der Zeit bei einer Antastung in der rechnergesteuerten ersten Betriebsart. Mit einem vergleichsweisen hohen Wert für eine Vorauslenkung TK_A_CNC wird der Tastkopf 28 zunächst bis zum Zeitpunkt t2 durch schnelles Verstellen der Position der Pinole 20, des Messschlittens 18 und des Messschlittenträgers 16 auf die Struktur 14 zugefahren. Beim Annähern des Tastkopfes 28 an die Position des zu messenden Punktes, die dem Steuergerät 38 in der ersten Betriebsart (CNC) zumindest grob bekannt ist, wird der Messkraftgenerator 56 so angesteuert, dass die Auslenkung TK_A ab einem Zeitpunkt t2 reduziert wird. Gleichzeitig verlangsamt sich die Geschwindigkeit, mit der der Tastkopf 28 an die Struktur 14 herangefahren wird, was aus der Darstellung der Fig 3 nicht ersichtlich ist. Zum Zeitpunkt t3 berührt die Tastkugel 36 die Struktur 14, und das Steuergerät 38 stellt in der Folge in einem Regelvorgang eine vorbestimmte Mess-Auslenkung TK_A_M des Tastkopfes 28 und eine vorbestimmte Messkraft F_M, mit der der Tastkopf 28 die Struktur 14 berührt, ein. Nach dem Einschwingen dieses Vorgangs werden zum Zeitpunkt tm das Signal des Induktivsensors 58 und die durch optische Abtastung erhaltenen Inkrementsignale von den Maßstäben 22, 24 und 26 in das Steuergerät 28 eingelesen und zu einem Messwert für die angetastete Koordinate 12 der Struktur 14 verknüpft.

Wesentlich für das Verständnis der Erfindung ist hierbei, dass sich die Tastkopfauslenkung TK_A beim Antasten der Struktur 14 im Wesentlichen in einer Richtung, nämlich fallend, verändert. Aus diesem Grund werden Hystereseeffekte, die beim Verformen des Federparallelogramms 54, 30, 54, 32 sowie beim Ansteuern des Messkraftgenerator 56 auftreten, im wesentlichen durch diesen Richtungssinn (fallend) bestimmt.

Fig. 4 zeigt im Gegensatz zur Darstellung der Fig. 3 den Verlauf einer Tastkopfauslenkung TK_A in einer benutzergeführten zweiten Betriebsart nach dem Stand der Technik. In dieser Betriebsart wird anfangs mit einer kleinen Tastkopfauslenkung TK_A_B begonnen, weil die Geschwindigkeiten, mit denen der Tastkopf 28 in der benutzergeführten zweiten Betriebsart bewegt wird, wesentlich geringer sind als in der rechnergesteuerten ersten Betriebsart. Aufgrund der geringeren Geschwindigkeit ist gewissermaßen auch eine geringere Bremswegreserve, wie sie durch die Tastkopfauslenkung TK_A_B bereitgestellt wird, erforderlich.

Durch Betätigung des Steuerhebels 52 aus der Fig. 1 fährt der Benutzer den Tastkopf 28 allmählich an den gewünschten Punkt der Struktur 14, dessen Koordinate 12 messtechnisch erfaßt werden soll. Wie bereits weiter oben bemerkt, ist es bei einer geforderten Genauigkeit im Mikrometerbereich erforderlich, dass beim Erfassen der Messwerte die Messkraft möglichst reproduzierbar eingestellt wird. Dies läßt sich nicht durch eine Benutzerführung mittels manueller Eingriffe über Steuerhebel 52 erreichen.

Aus diesem Grund verläuft die benutzergeführte Messwertaufnahme üblicherweise so, dass der Benutzer den zu vermessenden Punkt auf der Struktur 14 manuell anfährt und das Steuergerät 38 nach dem manuellen Anfahren die Einstellung der Messkraft und der vorgeschriebenen Tastkopfauslenkung übernimmt.

Das Aufnehmen von Messwerten in der benutzergeführten zweiten Betriebsart gliedert sich demnach in einen benutzergeführten ersten Teilmodus, in dem der Tastkopf 28 manuell auf den zu messenden Punkt gefahren wird, und einen zweiten Teilmodus, in dem das Steuergerät 38 die Einstellung definierter und reproduzierbarer Messbedingungen übernimmt. Der Benutzer signalisiert dem Steuergerät 38 seinen Wunsch, einen Messwert aufzunehmen, dadurch, dass er den Tastkopf 28 beim Erreichen des gewünschten Punktes mit der Koordinate 12 auf der Struktur 14 zunächst weiter manuell auf die Struktur 14 zu bewegt. Nach dem ersten Kontakt der Tastkugel 36 mit der Struktur 14 zu einem Zeitpunkt t0 wird dadurch zwangsläufig die Tastkopfauslenkung TK_A verringert, bis ein Schwellenwert S erreicht, überdrückt oder durchlaufen wird.

Dieses Erreichen des Schwellenwertes S wird vom Steuergerät 38, das die Signale des Induktivsensors 58 auswertet, detektiert und dient dazu, den zweiten Teilmodus auszulösen. Im zweiten Teilmodus übernimmt das Steuergerät 38 die weitere Steuerung der Antriebe des Koordinatenmessgerätes und koppelt das Bedienpult 48 mit dem Steuerhebel 52 gewissermaßen von den Antrieben des Koordinatenmessgerätes 10 ab. Dies ist in der Darstellung der Fig. 4 zum Zeitpunkt t1 der Fall. Anschließend stellt das Steuergerät 38 automatisch eine vorbestimmte Messkraft F_M und eine vorbestimmte Messauslenkung TK_A_M des Tastkopfes ein.

In der Darstellung der Fig. 4 ist der Wert der vorbestimmten Mess-Auslenkung TK_A_M ungefähr gleich Null. Nach dem Einschwingen des Regelvorgangs wird auch hier zum Zeitpunkt tm der Messwert erfaßt, indem die Signale der beteiligten Induktivgeber und Inkrementalmaßstäbe in das Steuergerät 38 eingelesen werden und dort verknüpft werden.

Wesentlich für das Verständnis der Erfindung ist hier, dass das Einstellen der vorbestimmten Mess-Auslenkung TK_A_M des Tastkopfes 28 mit einem anderen Richtungssinn erfolgt als bei dem in der Fig. 3 dargestellten Verlauf (hier steigend). Die Erfinder haben erkannt, dass aus diesem Richtungsunterschied Unterschiede der Messwerte resultieren können, die einerseits nach dem Verlauf der Fig. 3 und andererseits nach dem Verlauf der Fig. 4 bestimmt wurden.

Dieses Auseinanderfallen der Messwerte beim messtechnischen Erfassen gleicher Punkte in der ersten Betriebsart und in der zweiten Betriebsart wird durch die im Folgenden erläuterte Verfahrensweise nach der Fig. 5 vermieden.

Auch die Fig. 5 stellt den Verlauf der Tastkopfauslenkung TK_A_B im Rahmen einer benutzergeführten zweiten Betriebsart dar. Insofern ist der Signalverlauf anfangs, das heißt bis zum Zeitpunkt t1, identisch mit dem Signalverlauf aus der Fig. 4. Wie bereits im Zusammenhang mit der Fig. 4 erläutert wurde, wird auch bei dem Verlauf der Fig. 5 nach dem Zeitpunkt t1 die weitere Steuerung der Tastkopfauslenkung TK_A durch das Steuergerät 38 übernommen und somit vom Bedienpult 48 entkoppelt. Im Unterschied zum Verlauf nach der Fig. 4, wird bei dem hier neu vorgestellten Verlauf nach der Fig. 5 die Tastkopfauslenkung zunächst wieder vergrößert, bis zu einem Zeitpunkt t2 beispielsweise ihr Ausgangswert, der bei der ersten Berührung der Struktur 14 durch die Tastkugel 36 zum Zeitpunkt t0 geherrscht hat, erreicht ist.

Ab diesem Zeitpunkt t2 schließt sich ein Regelvorgang an, in dem das Steuergerät 38 einen Sollwert für die Mess-Auslenkung TK_A_M des Tastkopfes 28 aus einer Null-Lage im Zustand der Berührung der Struktur mit der vorbestimmten Messkraft F_M einstellt. Wesentlich ist bei dem Verlauf nach der Fig. 5 ab dem Zeitpunkt t2, dass dieser Regelvorgang Änderungen der Tastkopfauslenkungen TK_A hervorruft, die den gleichen Richtungssinn haben wie beim Verlauf der Fig. 3, die eine Antastung in der ersten Betriebsart (CNC-Verlauf) repräsentiert.

Auf diese Weise werden beim neu vorgestellten Verfahren auch beim manuellen Antasten in der zweiten Betriebsart die Einregelvorgänge letztlich mit gleichem Richtungssinn vorgenommen wie in der ersten Betriebsart, so dass sich eventuell auftretende Hystereseeffekte gleichen. Aus diesem Grund treten bei dem neu vorgestellten Verfahren für die zweite Betriebsart nach der Fig. 5 weniger starke Streuungen auf als bei der Durchführung der zweiten Betriebsart nach der Fig. 4.

Nach der durchgezeichneten Kurve in der Fig. 5 wird nach dem manuellen Vor-Antasten der Struktur 14 zwischen den Zeitpunkten t0 und t1 ein neuer Soll-Wert TK_A_Soll für die Tastkopfauslenkung angefahren, der der Tastkopfauslenkung TK_A_B vor dem Zeitpunkt t0 entspricht. Auf diese Weise werden störende Hystereseeffekte durch das Vorantasten weitgehend wieder ausgeglichen. Alternativ dazu kann auch, wie es in dem gestrichelten Verlauf dargestellt ist, ein höher liegender Sollwert TK_A_Soll = TK_A_CNC eingestellt werden. Dies hat den Vorteil, dass die bei der ersten Betriebsart auftretenden Verhältnisse auch in der zweiten Betriebsart mit noch besserer Übereinstimmung eingestellt werden. Allerdings verlängert sich dadurch, wie aus einem Vergleich der gestrichelten und der durchgezeichneten Kurve in der Fig. 5 ab dem Zeitpunkt t2 ersichtlich ist, auch die Einregelzeit bis zur Aufnahme von Messwerten zum Zeitpunkt tm.

Jedenfalls ergibt sich durch Einstellen dieses neuen Sollwertes TK_A_Soll zu Beginn des zweiten Teilmodus (rechnergesteuert) in der zweiten Betriebsart die Möglichkeit, die Lage dieses Sollwertes sowohl im Hinblick auf eine möglichst hohe Genauigkeit als auch im Hinblick auf eine möglichst kurze Messzeit zu optimieren.

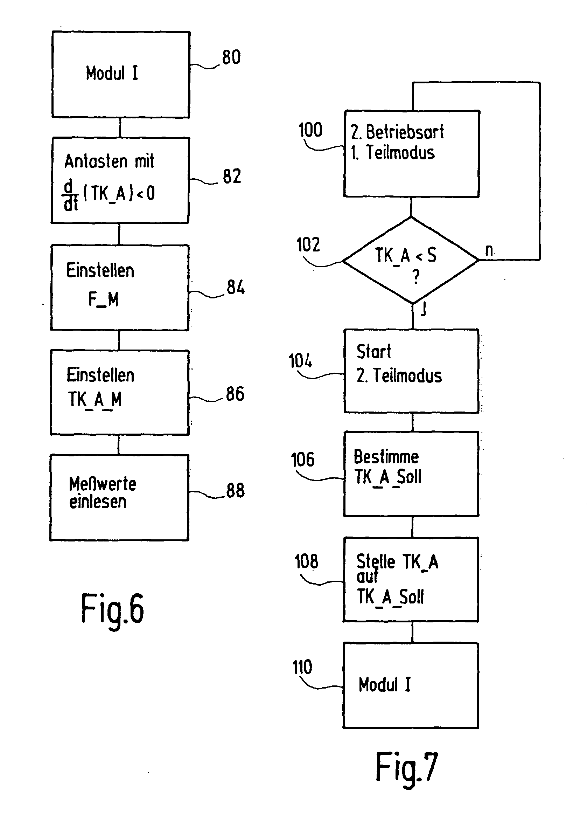

Fig. 6 offenbart eine Schrittfolge zur rechnergesteuerten Antastung in Form eines als Modul 1 bezeichneten Flußdiagramms. Dieses Modul 1 wird in einem Schritt 80 von einem übergeordneten Steuerungsprogramm durch das Steuergerät 38 aufgerufen. Dies findet etwa zum Zeitpunkt t2 in der Fig. 3 statt. Anschließend erfolgt im Schritt 82 ein Antasten der Struktur 14 bei der gewünschten Koordinate 12 durch den Tastkopf 28, bzw. durch dessen Tastkugel 36, durch entsprechend koordiniertes Reduzieren der Tastkopfvorauslenkung TK_A_CNC und der Bewegung des Messschlittens 18. Im Rahmen der Figuren wird hier nur die X-Richtung betrachtet.

Wesentlich ist dabei, dass eventuell auftretende Hystereseeffekte durch den fallenden Verlauf der Tastkopfauslenkung TK_A bestimmt werden.

Nach dem Berühren der Struktur 14 durch die Tastkugel 36 zum Zeitpunkt t3 schließt sich in den Schritten 84 und 86 das Einstellen einer vorbestimmten Messkraft F_M und einer vorbestimmten Auslenkung des Tastkopfes TK_A_M an, bevor im Schritt 88 zum Zeitpunkt tm die Messwerte der Induktivsensoren 58 und der Inkrementalmaßstäbe 22, 24 und 26 eingelesen werden.

Fig. 7 zeigt eine Verfahrensschrittfolge als mögliche Realisierung zur Erzeugung des in der Fig. 5 dargestellten Signalverlaufes. Ausgehend von einem benutzergeführten Betrieb des Koordinatenmessgerätes 10 im ersten Teilmodus der zweiten Betriebsart im Schritt 100, erfolgt im Schritt 102 eine Abfrage, ob der aktuelle Wert der Tastkopfauslenkung TK_A einen vorbestimmten Schwellenwert S unterschreitet. Solange dies nicht der Fall ist, wird die Schleife aus den Schritten 100 und 102 wiederholt durchlaufen. Wird dann zum Zeitpunkt t1 der Schwellenwert S unterschritten, so wird die Abfrage im Schritt 102 bejaht und die Schrittfolge verzweigt zum Schritt 104, in dem der zweite Teilmodus der zweiten Betriebsart gestartet wird. Selbstverständlich kann das Auslösen des zweiten Teilmodus der zweiten Betriebsart auch anders erfolgen, beispielsweise interruptgesteuert.

An den Start des zweiten Teilmodus, in dem das Steuergerät 38 die Steuerung der Tastkopfbewegung übernimmt, schließt sich im Schritt 106 eine Bestimmung eines Sollwertes TK_A_Soll für die Tastkopfauslenkung zu Beginn des Einregelns definierter Messbedingungen (Messkraft, Tastkopfauslenkung) an. Nach welchen Kriterien dieser Sollwert TK_A_Soll bestimmt wird, wurde im Zusammenhang mit der Fig. 5 beschrieben.

Anschließend verzweigt die Schrittfolge in den Schritt 110, in dem Modul 1 aufgerufen wird. Mit anderen Worten: In der Ausgestaltung der Figuren 6 und 7 wird auch in der zweiten Betriebsart die gleiche Richtung zur Einregelung reproduzierbarer Messbedingungen benutzt, wie in der ersten Betriebsart.

## Patentansprüche

1. Verfahren zum Betrieb eines wenigstens in einer ersten Betriebsart und einer zweiten Betriebsart betreibbaren Koordinatenmessgerätes (10) mit messendem Tastkopf (28) mit den Schritten:
Antasten (82) einer messtechnisch zu erfassenden Koordinate (12) einer Struktur (14) in einem Messvolumen des Koordinatenmessgerätes (10) mit dem messenden Tastkopf (28).
Einstellen (84) einer vorbestimmten Messkraft F_M, mit der der Tastkopf (28) die Struktur (14) berührt,
Einstellen (86) einer vorbestimmten Messauslenkung TK_A_M des Tastkopfes (28) aus einer Null-Lage im Zustand der Berührung der Struktur (14) mit der vorbestimmten Messkraft F_M, wobei die vorbestimmte Messauslenkung TK A M des Tastkopfes (28) in der ersten Betriebsart mit einem vorbestimmten Richtungssinn von Änderung d/dt(TK_A) der Auslenkung TK_A erreicht wird, **dadurch gekennzeichnet, dass** das Antasten (82) der Koordinate (12) der Struktur (14) durch den Tastkopf (28) vor dem Einstellen (84) der vorbestimmten Messkraft F_M in der zweiten Betriebsart mit dem gleichen Richtungssinn d/dt(TK_A) erreicht wird wie in der ersten Betriebsart.

2. Verfahren nach Anspruch 1, **dadurch gekennzeichnet, dass** die erste Betriebsart eine vollständig rechnergesteuerte Betriebsart ist und dass die zweite Betriebsart einen benutzergeführten ersten Teilmodus und einer rechnergesteuerten zweiten Teilmodus aufweist, wobei das in der zweiten Betriebsart erfolgende Einstellen (84) der vorbestimmten Messkraft F M im zweiten Teilmodus erfolgt.

3. Verfahren nach Anspruch 2, **dadurch gekennzeichnet dass** beim Betrieb in der zweiten Betriebsart, der zweite Teilmodus nach einem im ersten Teilmodus erfolgenden vor Antasten der Struktur (14) aufgelöst wird, wenn die durch das Vor-Antasten erfolgende Auslenkung TK_A des Tastkopfes (28) einen vorbestimmten Schwellenwert S durchläuft.

4. Verfahren nach Anspruch 3, **dadurch gekennzeichnet, dass** der Wert der vorbestimmten Mess-Auslenkung TK_A_M zwischen dem vorbestimmten Schwellenwert S und dem Wert der Auslenkung TK_A des Tastkopfes (28) im Zeitpunkt t0 der Berührung der Struktur durch den Tastkopf (28) beim Vor-Antasten liegt.

5. Verfahren nach Anspruch 4, **dadurch gekennzeichnet, dass** der vorbestimmte Schwellenwert S mit Bezug auf den Wert der Mess-Auslenkung TK_A_M symmetrisch zum Wert der Auslenkung TK_A des Tastkopfes (28) im Zeitpunkt t0 der Berührung der Struktur (14) durch den Tastkopf (28) bei der vor-Antastung liegt.

6. verfahren nach Anspruch 4, **dadurch gekennzeichnet, dass** der vorbestimmte Schwellenwert S mit Bezug auf den Wert der Mess-Auslenkung TK_A_M nicht-symmetrisch zum Wert der Auslenkung TK_A des Tastkopfes (28) im Zeitpunkt t0 der Berührung der Struktur (14) durch den Tastkopf (24) bei der Vor-Antastung liegt.

7. Verfahren nach wenigstens einem der Ansprüche 3 bis 6 **dadurch gekennzeichnet, dass** die Auslenkung TK_A des Tastkopfes (28) nach dem mit einem bestimmten Richtungssinn d/dt(TK A) erfolgenden Durchlaufen des Schwellenwerte S in die entgegengesetzte Richtung verändert wird.

8. Verfahren nach Anspruch 7, **dadurch gekennzeichnet, dass** die Auslenkungen TK_A des Tastkopfes (28) auf einen vorbestimmten Wert TK_A_Soll verändert werden.

9. Verfahren nach Anspruch 8, **dadurch gekennzeichnet, dass** der vorbestimmte Wert TK_A_Soll dem Wert der Auslenkung TK_A_B des Tastkopfes im Zeitpunkt t0 der Berührung der Struktur (14) durch den Tastkopf (28) bei der vor-Antastung entspricht.

10. Verfahren nach Anspruch 9, **dadurch gekennzeichnet, dass** der vorbestimmte Wert TK_A_Soll dem wert einer konstanten Auslenkung TK_A_CNC des Tastkopfes (28) in der rechnergesteuerten ersten Betriebsart entspricht.

11. Verfahren nach Anspruch 8, **dadurch gekennzeichnet, dass** der vorbestimmte Wert TK_A_Soll zwischen den Werten der Auslenkung TR_A_B des Tastkopfes 28 im Zeitpunkt t0 der Berührung der Struktur (14) durch den Tastkopf (28) bei der Vor-Antastung und dem Wert einer konstanten Auslenkung TK_A_CNC des Tastkopfes (28) in der rechnergesteuerten ersten Betriebsart liegt.

12. Verfahren nach Anspruch 8, **dadurch gekennzeichnet, dass** die Auslenkung TK_A des Tastkopfes (28) anschließend in Richtung auf die vorbestimmte Mess-Auslenkung TK_A_M verändert wird.

13. Verfahren nach einem der vorhergehenden Ansprüche, **dadurch gekennzeichnet, dass** das Koordinatenmessgerät (10) in der ersten Betriebsart vor dem Antasten der Struktur (14) mit größerer Verstellgeschwindigkeit und Auslenkung TK_A_CNC des Tastkopfes (28) betrieben wird als in der zweiten Betriebsart, und dass die größere Verstellgeschwindigkeit und Vorauslenkung TK_A_CNC des Tastkopfes (28) beim Annähern an die Struktur (14) verringert wird.

14. Verfahren nach einem der vorhergehenden Ansprüche, **dadurch gekennzeichnet, dass** das Koordinatenmessgerät (10) für den Betrieb in der ersten Betriebsart kalibriert ist.

15. Verfahren nach einem der Ansprüche 1 bis 13, **dadurch gekennzeichnet, dass** das Koordinatenmessgerät (10) für den Betrieb in der zweiten Betriebsart kalibriert ist.

16. Koordinatenmessgerät (10) mit einem messenden Tastkopf (28) zum Antasten (82) einer messtechnisch zu erfassenden Koordinate (12) einer Struktur (14) in einem messvolumen des Koordinatenmessgerätes (10), mit wenigstens einem Messkraftgenerator (56) zum Einstellen (84) einer vorbestimmten Messkraft F_M, mit der der Tastkopf (28) die Struktur (14) berührt, und mit einem Steuergerät (38) zum Einstellen (86) einer vorbestimmten Mess-Auslenkung TK_A_M des Tastkopfes aus einer Null-Lage im Zustand der Berührund der Struktur (14) durch den Tastkopf (28) mit der vorbestimmten Messkraft F_M, wobei das Koordinatenmessgerät (10) in wenigstens einer ersten Betriebsart und einer zweiten Betriebsart betreibbar ist, und wobei das Steuergerät (38) die vorbestimmte Mess-Auslenkung TK_A_M des Tastkopfs (28) in der ersten Betriebsart mit einem vorbestimmten Richtungssinn d/dt (TK A) von Änderungen der Auslenkung TK_A des Tastkopfes (28) einstellt, **dadurch gekennzeichnet, dass** das Steuergerät (38) das Antasten (82) der Koordinate (12) der Struktur (14) durch den Tastkopf (28) vor dem Einstellen (84) der vorbestimmten Messkraft F_M in der zweiten Betriebsart mit dem gleichen Richtungs: sinn d/dt (TK_A) einstellt wie in der ersten Betriebsart.

17. Koordinatenmessgerät (10) nach Anspruch 16, **gekennzeichnet durch** Mittel (48), (52) zum benutzergeführten Betrieb des Koordinatenmessgerätes (10) in der zweiten Betriebsart.

18. Koordinatenmessgerät (10) nach Anspruch 17, **dadurch gekennzeichnet, dass** die Benutzerführung durch Steuerhebel (52) oder Handräder erfolgt, mit denen Antriebe des Koordinatenmessgerätes (10) mit Unterstützung des Steuergerätes (38) aktiviert werden.

## Claims

1. A method of operating a coordinate measuring apparatus (10) operable at least in a first operating mode and a second operating mode and having a measuring probe (28), the method comprising the steps of:
scanning (82) a coordinate (12), to be recorded metrologically, of a structure (14) in a measuring volume of the coordinate measuring apparatus (10) with the measuring probe (28),
setting (84) a predetermined measuring force F_M with which the probe (28) touches the structure (14),
setting (86) a predetermined measurement deflection TK_A_M of the probe (28) from a zero position in the state in which it touches the structure (14) with the predetermined measuring force F_M, the predetermined measurement deflection TK_A_M of the probe (28) in the first operating mode being achieved with a predetermined direction of movement of change d/dt (TK_A) of the deflection TK_A,
**characterised in that** scanning (82) of the coordinate (12) of the structure (14) is achieved by the probe (28) prior to setting (84) of the predetermined measuring force F_M in the second operating mode with the same direction of movement d/dt (TK_A) as in the first operating mode.

2. A method according to claim 1, **characterised in that** the first operating mode is a completely computer-controlled operating mode and **in that** the second operating mode comprises a user-guided first sub-mode and a computer-controlled second sub-mode, the setting (84) of the predetermined measuring force F_M effected in the second operating mode taking place in the second sub-mode.

3. A method according to claim 2, **characterised in that**, during operation in the second operating mode, the second sub-mode is triggered after preliminary scanning of the structure (14) effected in the first sub-mode, if the deflection TK_A of the probe (28) effected by the preliminary scanning passes through a predetermined threshold value S.

4. A method according to claim 3, **characterised in that** the value of the predetermined measurement deflection TK_A_M lies between the predetermined threshold value S and the value of the deflection TK_A of the probe (28) at the time to at which the structure is touched by the probe (28) during preliminary scanning.

5. A method according to claim 4, **characterised in that**, with reference to the value of the measurement deflection TK_A_M, the predetermined threshold value S is symmetrical to the value of the deflection TK_A of the probe (28) at the time t0 at which the structure (14) is touched by the probe (28) during preliminary scanning.

6. A method according to claim 4, **characterised in that**, with reference to the value of the measurement deflection TK_A_M, the predetermined threshold value S is asymmetrical to the value of the deflection TK_A of the probe (28) at the time to at which the structure (14) is touched by the probe (28) during preliminary scanning.

7. A method according to at least one of claims 3 to 6, **characterised in that** the deflection TK_A of the probe (28) is changed to the opposite direction once the threshold value S has been passed through in a particular direction of movement d/dt(TK_A).

8. A method according to claim 7, **characterised in that** the deflections TK_A of the probe (28) are changed to a predetermined value TK_A_setpoint.

9. A method according to claim 8, **characterised in that** the predetermined value TK_A_setpoint corresponds to the value of the deflection TK_A_B of the probe (28) at the time to at which the structure (14) is touched by the probe (28) during preliminary scanning.

10. A method according to claim 9, **characterised in that** the predetermined value TK_A_setpoint corresponds to the value of a constant deflection TK_A_CNC of the probe (28) in the computer-controlled first operating mode.

11. A method according to claim 8, **characterised in that** the predetermined value TK_A_setpoint lies between the values of the deflection TK_A_B of the probe (28) at the time t0 at which the structure (14) is touched by the probe (28) during preliminary scanning and the value of a constant deflection TK_A_CNC of the probe (28) in the computer-controlled first operating mode.

12. A method according to claim 8, **characterised in that** the deflection TK_A of the probe (28) is then changed in the direction of the predetermined measurement deflection TK_A_M.

13. A method according to any one of the preceding claims, **characterised in that** the coordinate measuring apparatus (10) is operated in the first operating mode prior to scanning of the structure (14) at a higher displacement velocity and deflection TK_A_CNC of the probe (28) than in the second operating mode, and **in that** the higher displacement velocity and preliminary deflection TK_A_CNC of the probe (28) is reduced on nearing the structure (14).

14. A method according to any one of the preceding claims, **characterised in that** the coordinate measuring apparatus (10) is calibrated for operation in the first operating mode.

15. A method according to any one of claims 1 to 13, **characterised in that** the coordinate measuring apparatus (10) is calibrated for operation in the second operating mode.

16. A coordinate measuring apparatus (10) having a measuring probe (28) for scanning (82) a coordinate (12), to be recorded metrologically, of a structure (14) in a measuring volume of the coordinate measuring apparatus (10), having at least one measuring force generator (56) for setting (84) a predetermined measuring force (F_M) with which the probe (28) touches the structure (14), and having a control unit (38) for setting (86) a predetermined measurement deflection TK_A_M of the probe from a zero position in the state in which the structure (14) is touched by the probe (28) with the predetermined measuring force F_M, the coordinate measuring apparatus (10) being operable in at least a first operating mode and second operating mode, and the control unit (38) setting the predetermined measurement deflection TK_A_M of the probe (28) in the first operating mode with a predetermined direction of movement d/dt (TK_A) of changes of the deflection TK_A of the probe, **characterised in that** the control unit (38) sets scanning (82) of the coordinate (12) of the structure (14) by the probe (28) prior to setting (84) of the predetermined measuring force F_M in the second operating mode with the same direction of movement d/dt (TK_A) as in the first operating mode.

17. A coordinate measuring apparatus (10) according to claim 16, **characterised by** means (48, 52) for user-guided operation of the coordinate measuring apparatus (10) in the second operating mode.

18. A coordinate measuring apparatus (10) according to claim 17, **characterised in that** user guidance is effected by control levers (52) or handwheels, with which driving mechanisms of the coordinate measuring apparatus (10) are activated with the assistance of the control unit (38).

## Revendications

1. Procédé d'opération d'un appareil de mesure de coordonnées (10) pouvant fonctionner au moins dans un premier mode opératoire et un second mode opératoire avec un palpeur (28) effectuant des mesures, comportant les étapes suivantes :
palpage (82) d'une coordonnée (12) à détecter métrologiquement d'une structure (14) dans un volume de mesure de l'appareil de mesure de coordonnées (10) avec le palpeur (28) effectuant des mesures,
réglage (84) d'une force de mesure prédéterminée F_M, avec laquelle le palpeur (28) touche la structure (14),
réglage (86) d'une déviation de mesure prédéterminée TK_A_M du palpeur (28) d'une position zéro à l'état de contact de la structure (14) avec la force de mesure prédéterminée F_M, la déviation de mesure prédéterminée TK_A_M du palpeur (28) étant obtenue dans le premier mode opératoire avec un sens prédéterminé par la modification d/dt(TK_A) de la déviation TK_A,
**caractérisé en ce que** le palpage (82) de la coordonnée (12) de la structure (14) par le palpeur (28) est obtenu avant le réglage (84) de la force de mesure prédéterminée F_M dans le second mode opératoire avec le même sens d/dt(TK_A) que dans le premier mode opératoire.

2. Procédé selon la revendication 1, **caractérisé en ce que** le premier mode opératoire est un mode opératoire complètement piloté par ordinateur et **en ce que** le second mode opératoire présente un premier mode partiel guidé par l'utilisateur et un second mode partiel piloté par ordinateur, le réglage (84) effectué dans le second mode opératoire de la force de mesure prédéterminée F_M étant effectué dans le second mode partiel.

3. Procédé selon la revendication 2, **caractérisé en ce que** lors de l'opération dans le second mode opératoire, le second mode partiel est déclenché après un prépalpage de la structure (14) effectué dans le premier mode partiel, si la déviation TK_A effectuée par le prépalpage du palpeur (28) passe une valeur seuil S prédéterminée.

4. Procédé selon la revendication 3, **caractérisé en ce que** la valeur de la déviation de mesure prédéterminée TK_A_M se trouve entre la valeur seuil S prédéterminée et la valeur de la déviation TK_A du palpeur (28) au moment t0 du contact de la structure par le palpeur (28) lors du prépalpage.

5. Procédé selon la revendication 4, **caractérisé en ce que** la valeur seuil S prédéterminée en référence à la valeur de la déviation de mesure TK_A_M se trouve symétrique à la valeur de la déviation TK_A du palpeur (28) au moment t0 du contact de la structure (14) par le palpeur (28) lors du prépalpage.

6. Procédé selon la revendication 4, **caractérisé en ce que** la valeur seuil S prédéterminée en référence à la valeur de la déviation de mesure TK_A_M ne se trouve pas symétrique à la valeur de la déviation TK_A du palpeur (28) au moment t0 du contact de la structure (14) par le palpeur (28) lors du prépalpage.

7. Procédé selon au moins l'une quelconque des revendications 3 à 6, **caractérisé en ce que** la déviation TK_A du palpeur (28) est modifiée après le passage de la valeur seuil S effectué avec un sens déterminé d/dt(TK_A) dans le sens opposé.

8. Procédé selon la revendication 7, **caractérisé en ce que** les déviations TK_A du palpeur (28) sont modifiées à une valeur prédéterminée TK_A_Soll.

9. Procédé selon la revendication 8, **caractérisé en ce que** la valeur prédéterminée TK_A_Soll correspond à la valeur de la déviation TK_A_B du palpeur au moment t0 du contact de la structure (14) par le palpeur (28) lors du prépalpage.

10. Procédé selon la revendication 9, **caractérisé en ce que** la valeur prédéterminée TK_A_Soll correspond à la valeur d'une déviation constante TK_A_CNC du palpeur (28) dans le premier mode opératoire piloté par ordinateur.

11. Procédé selon la revendication 8, **caractérisé en ce que** la valeur prédéterminée TK_A_Soll se trouve entre les valeurs de déviation TK_A_B du palpeur (28) au moment t0 du contact de la structure (14) par le palpeur (28) lors du prépalpage et la valeur d'une déviation constante TK_A_CNC du palpeur (28) dans le premier mode opératoire piloté par ordinateur.

12. Procédé selon la revendication 8, **caractérisé en ce que** la déviation TK_A du palpeur (28) est ensuite modifiée en direction de la déviation de mesure prédéterminée TK_A_M.

13. Procédé selon l'une quelconque des revendications précédentes, **caractérisé en ce que** l'appareil de mesure de coordonnées (10) fonctionne dans le premier mode opératoire avant le palpage de la structure (14) à une vitesse de réglage et une déviation TK_A_CNC du palpeur (28) supérieures à celle du second mode opératoire, et **en ce que** la vitesse de réglage et la prédéviation TK_A_CNC du palpeur (28) supérieures sont réduites lors de l'approche de la structure (14).

14. Procédé selon l'une quelconque des revendications précédentes, **caractérisé en ce que** l'appareil de mesure de coordonnées (10) est calibré pour le fonctionnement dans le premier mode opératoire.

15. Procédé selon l'une quelconque des revendications 1 à 13, **caractérisé en ce que** l'appareil de mesure de coordonnées (10) est calibré pour le fonctionnement dans le second mode opératoire.

16. Appareil de mesure de coordonnées (10) avec un palpeur (28) effectuant des mesures pour le palpage (82) d'une coordonnée (12) à détecter métrologiquement d'une structure (14) dans un volume de mesure de l'appareil de mesure de coordonnées (10), avec au moins un générateur de force de mesure (56) pour le réglage (84) d'une force de mesure prédéterminée F_M, avec laquelle le palpeur (28) touche la structure (14), et avec un appareil de commande (38) pour le réglage (86) d'une déviation de mesure prédéterminée TK_A_M du palpeur d'une position zéro à l'état du contact de la structure (14) par le palpeur (28) avec la force de mesure prédéterminée F_M, appareil de mesure de coordonnées (10) pouvant fonctionner dans au moins un premier mode opératoire et un second mode opératoire, et l'appareil de commande (38) réglant la déviation de mesure prédéterminée TK_A_M du palpeur (28) dans le premier mode opératoire avec un sens prédéterminé d/dt (TK_A) par des modifications de la déviation TK_A du palpeur (28), **caractérisé en ce que** l'appareil de commande (38) règle le palpage (82) de la coordonnée (12) de la structure (14) par le palpeur (28) avant le réglage (84) de la force de mesure prédéterminée F_M dans le second mode opératoire avec le même sens d/dt (TK_A) que dans le premier mode opératoire.

17. Appareil de mesure de coordonnées (10) selon la revendication 16, **caractérisé par** des moyens (48), (52) pour l'opération guidée par l'utilisateur de l'appareil de mesure de coordonnées (10) dans le second mode opératoire.

18. Appareil de mesure de coordonnées (10) selon la revendication 17, **caractérisé en ce que** le guidage par l'utilisateur est effectué par un levier de commande (52) ou des volants, à l'aide desquels des entraînements de l'appareil de mesure de coordonnées (10) sont activés avec l'assistance de l'appareil de commande (38).
